(19) **Europäisches Patentamt**
**European Patent Office**
**Office européen des brevets**

(11) **EP 4 574 325 A1**

(12) **EUROPEAN PATENT APPLICATION**
published in accordance with Art. 153(4) EPC

(43) Date of publication:
**25.06.2025 Bulletin 2025/26**

(21) Application number: **23888625.3**

(22) Date of filing: **02.11.2023**

(51) International Patent Classification (IPC):
***B23K 20/12*** *(2006.01)*

(52) Cooperative Patent Classification (CPC):
**B23K 20/12**

(86) International application number:
**PCT/JP2023/039735**

(87) International publication number:
**WO 2024/101277 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2022 JP 2022178787**

(71) Applicant: **JFE Steel Corporation
Tokyo 100-0011 (JP)**

(72) Inventors:
• **MUNEMURA Naoaki
Tokyo 100-0011 (JP)**
• **TANIGUCHI Koichi
Tokyo 100-0011 (JP)**

(74) Representative: **Haseltine Lake Kempner LLP
Bürkleinstrasse 10
80538 München (DE)**

(54) **FRICTION ELEMENT WELDING METHOD**

(57) An object is to provide a friction element welding method. A friction element welding method of the present invention performs joining of a sheet assembly including two or more stacked metal sheets by pressing an element into the sheet assembly while rotating the element. The method includes, before a step of starting frictional heat welding, an oxide film removal step of bringing the bottom surface of the element into contact with an oxide film on the top surface of the lowermost metal sheet in the sheet assembly, and removing the oxide film. The element used in the oxide film removal step is such that the tip curvature of the element satisfies a predetermined conditional expression depending on the element diameter, the pressurizing force, the rotational speed, and the tensile strength of the lowermost metal sheet.

FIG. 2

EP 4 574 325 A1

## Description

Technical Field

The present invention relates to a friction element welding method for joining a sheet assembly including at least two stacked metal sheets by friction element welding.

Background Art

In recent years, the automotive industry has increasingly adopted high-strength steel sheets, known as ultrahigh-tensile steel sheets, in order to reduce the weight of vehicles and thereby reduce environmental loads and also to improve safety. This has led to an expectation for the development of steel sheets having higher strength and higher workability in the future. However, fusion welding, such as resistance spot welding, of steel sheets that are increased in strength and workability problematically gives weak joints due to the embrittlement of the solidification structure. For this reason, attention has been drawn to welding techniques capable of joining two or more steel sheets including a high-strength steel sheet without melting the steel sheets.

As described in Reference 1, an example of the non-melting welding techniques that are studied is FEW (friction element welding) in which an element is pressed into a sheet assembly while being rotated at high speed to establish joining. For example, the element used in the friction element welding (FEW) has a structure disclosed in Patent Literature 1.

[Reference 1]
Jamie D. Skovron, Brandt J. Ruszkiewicz, and Laine Mears, "INVESTIGATION OF THE CLEANING AND WELDING STEPS FROM THE FRICTION ELEMENT WELDING PROCESS", (ASME 2017 12th International Manufacturing Science and Engineering Conference collocated with the JSME/ASME 2017 6th International Conference on Materials and Processing, June 4-8, 2017 Los Angeles, California, USA)

Patent Literature 1 discloses an element (corresponding to the "connecting element" in Patent Literature 1) in which the tip of a mandrel portion is substantially flat, and a pin-shaped centering part protrudes from the center of the flat tip. This structure of the element allows each connecting process to be performed on the connection site in a focused manner by the pin-shaped centering part, and ensures that the frictional energy that is applied is concentrated exclusively on the position of the penetrating element.

Citation List

Patent Literature

PTL 1: Japanese Unexamined Patent Application Publication (Translation of PCT Application) No. 2013-527804

Summary of Invention

Technical Problem

Patent Literature 1 only discloses that the tip of the mandrel portion of the element has a pin shape. In actual element welding, however, the shape of the element needs to be designed in accordance with welding conditions. Patent Literature 1 is silent with respect to such designing.

If a lower sheet that will form a joint with an element has residual oxide on its top surface, the oxide is mixed into the joint to destroy the soundness of the joint, thus causing a decrease in joint strength. For this reason, element welding requires that an oxide (specifically, an oxide film) should be removed from the top surface of a lower sheet that will form a joint with an element.

A possible approach to this problem is to use an element having the shape described in Patent Literature 1. However, it has been found that the element of Patent Literature 1 has a narrow area of contact between the pin-shaped centering part at the lower part of the element and a sheet-shaped member, and thus the contact between the centering part and the sheet-shaped member requires a long time to remove an oxide on the surface of the sheet-shaped member (namely, the top surface of the lower member).

Here, the "lower sheet that will form a joint with an element" indicates a lowermost metal sheet that is to be friction element welded with the tip of the element (that is, the lower part of the element) and is arranged at the bottom of the metal sheets that constitute a sheet assembly. The "top surface of a lower sheet" indicates a metal sheet surface of a lower sheet in a mating surface between the lower sheet and a metal sheet placed on top of the lower sheet.

The present invention aims to solve the problems discussed above. It is therefore an object of the present invention to provide a friction element welding method that can join a sheet assembly composed of two or more metal sheets by friction element welding in a way that an oxide on the surface of a metal sheet that will be joined is removed quickly and a sound connection can be obtained.

Solution to Problem

In the present invention, extensive studies have been conducted to solve the above-described problems in friction element welding methods. A friction element welding method is a method of welding in which a sheet assembly including two or more stacked metal sheets is friction element welded by pressing an element into the sheet assembly while rotating the element at high speed.

The present inventors have experimented with a friction element welding method using various elements with different tip shapes in a step of removing an oxide (namely, an oxide film) on the top surface of a lower sheet. As a result, the present inventors have found that the problems are effectively solved and the process time required for the removal of an oxide film can be effectively shortened by appropriately changing the radius of curvature of the tip of the element (namely, the tip curvature of the element) depending on the diameter of the element (namely, the element diameter).

The finding will be explained in detail below. After an element has penetrated an upper sheet of a sheet assembly, the tip of the element rotating at high speed comes into contact with the top surface of a lower sheet of the sheet assembly. An oxide film present on the top surface of the lower sheet can be removed (here, this step will be written as the "oxide film removal step on the top surface of the lower sheet") quickly if the oxide film on the top surface of the lower sheet is smoothly expeled with the tip of the element. The area of an oxide film that needs to be expeled is larger with increasing diameter of the element. Here, an element should be used that has an element tip curvature controlled to an appropriate range in accordance with the element diameter, the pressurizing force and the rotational speed during the oxide film removal step, and the tensile strength of the workpiece (namely, the metal sheet constituting the sheet assembly). The use of such an element can ensure an appropriate area of contact between the lower part of the element and the top surface of the lower sheet. Such appropriate control of the shape of the element tip depending on the welding conditions has been found effective in shortening the time required for the oxide film removal step on the top surface of the lower sheet.

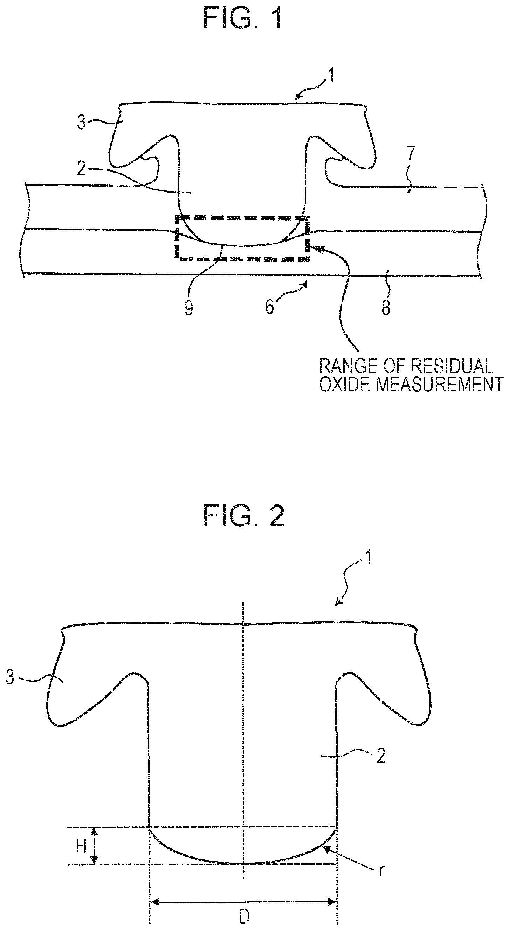

As will be described later, the "tip curvature of the element" indicates the radius of curvature (r) of the tip of the element illustrated in Fig. 2, and the "element diameter" refers to the diameter (D) of the element illustrated in Fig. 2.

The present invention has been made based on the findings discussed above. A gist of the present invention is as follows.

[1] A friction element welding method of joining a sheet assembly including two or more stacked metal sheets by pressing an element into the sheet assembly while rotating the element, the method including, before a step of starting frictional heat welding:

an oxide film removal step of bringing a lower part of the element into contact with a top surface of a lowermost metal sheet arranged at the bottom of the sheet assembly, and removing an oxide film,
the element used in the oxide film removal step being such that a radius of curvature r of a tip of the element satisfies:

expression (1) and $r \geq D/2$ when $5.0 > D \geq 3.0$,
expression (2) and $r \geq D/2$ when $7.0 > D \geq 5.0$, and
expression (3) and $r \geq D/2$ when $D \geq 7.0$,

$$(-0.017 \times D + 0.13) \times (P \times R/TS) \leq r \leq 400 - D \quad \cdots (1)$$

$$(-0.0042 \times D + 0.071) \times (P \times R/TS) \leq r \leq 400 - D \quad \cdots (2)$$

$$(-0.00042 \times D + 0.045) \times (P \times R/TS) \leq r \leq 400 - D \quad \cdots (3)$$

wherein D is an element diameter (mm), r is the radius of curvature (mm), P is a pressurizing force (kN), R is a rotational speed (rpm), and TS is a tensile strength (MPa) of the lowermost metal sheet.

[2] The friction element welding method according to [1], wherein the rotational speed in the oxide film removal step is 500 rpm or more.
[3] The friction element welding method according to [1] or [2], wherein the pressurizing force in the oxide film removal step is 1 kN or more.
[4] The friction element welding method according to any one of [1] to [3], wherein at least one of the two or more metal sheets is a steel sheet, and the tensile strength of the steel sheet is 590 MPa or more.

Advantageous Effects of Invention

According to the present invention, the radius of curvature (r) of the element tip is specified appropriately depending on the element diameter (D) and the welding conditions in the oxide film removal step so as to ensure an appropriate area of contact between the lower part of the element and the top surface of the lower sheet. In this manner, the oxide film removal step on the surface of the metal sheet to be joined (namely, the top surface of the lower sheet) can be completed in a short time without being affected by factors, such as the chemical composition of the metal sheets (the workpieces).

Brief Description of Drawings

[Fig. 1] Fig. 1 is a schematic view illustrating an exemplary sheet assembly composed of two metal sheets that is joined by a friction element welding method of the present invention.
[Fig. 2] Fig. 2 is a sectional view illustrating an exemplary shape of an element used in a friction element welding method of the present invention.
[Fig. 3] Fig. 3 is a schematic view illustrating an exemplary connection using a conventional element. Description of Embodiments

The present invention will be described below. It should be noted that the present invention is not limited to the embodiments below.
First, a friction element welding method according to an embodiment of the present invention will be described with reference to Figs. 1 and 2. Fig. 1 is a sectional view illustrating an exemplary sheet assembly consisting of two metal sheets that is joined by a friction element welding method of the present invention. Fig. 2 is a sectional view illustrating an exemplary shape that explains the tip curvature of an element for use in the friction element welding method of the present invention.
In the friction element welding method (hereinafter, also written as the "welding method") of the present invention, an element having a curvature at the tip of the element is rotated and pressed into a sheet assembly including two or more stacked metal sheets, and thereby the sheet assembly is joined (see Figs. 1 and 2). This joining is friction welding by frictional heat. The "sheet assembly including two or more stacked metal sheets" indicates a sheet assembly in which two or more metal sheets are stacked on top of one another.
While the following description will discuss friction element welding of two stacked metal sheets, the present invention is applicable similarly to welding of three or more stacked metal sheets and can offer similar advantageous effects.
The welding method of the present invention includes at least, before a step of starting frictional heat welding, an oxide film removal step in which a lower part of an element is brought into contact with an oxide film on the top surface of a lowermost metal sheet (hereinafter, written as the "lower sheet") arranged at the bottom of a sheet assembly, and the oxide film is removed.
For example, the entire process of the welding method preferably includes a step of penetrating the element through an upper sheet, a step of removing an oxide film on the top surface of a lower sheet, a step of plastic deformation by frictional heat between the lower part of the element and the top surface of the lower sheet, and a step of compression. These steps will be described below.
Here, the "upper sheet" indicates an uppermost metal sheet that is placed at the top of the metal sheets (the workpieces) constituting the sheet assembly. The upper sheet and the lower sheet may be sheet-shaped members. The element includes a mandrel portion and a collar portion, and has a predetermined radius of curvature (r) at the tip of the mandrel portion (namely, the tip of the element) (see Fig. 2).

[Upper sheet penetration step]

Although not shown in the figure, first, the stacked metal sheets (namely, the sheet assembly) are placed onto a support table of a welding device in such a way that the sheet assembly faces the element attached to the welding device. Next, the upper sheet penetration step is started. In this step, the rotational speed of the element and the pressurizing force on the element are controlled with a control unit of the welding device. While being rotated at a predetermined rotational speed, the element is brought into contact with the upper sheet and furthermore a pressurizing force is applied by the control unit to penetrate the element into the upper sheet. As a result, the upper sheet that is a sheet-shaped member is plasticized by frictional heat to allow the mandrel portion of the element to penetrate the upper sheet. The element finally penetrates through the upper sheet, and the lower part of the element comes into contact with the top surface of the lower sheet.

To apply the welding method of the present invention to joining of metal sheets including ultrahigh-tensile steel, which will be described later, it is preferable that the pressurizing force in this step be 3 to 6 kN and the rotational speed be 3000 to 7000 rpm. If the pressurizing force is less than 3 kN, there is a risk that the pressurizing force will not promote the penetration into the upper sheet. If, on the other hand, the pressurizing force is more than 6 kN, the element will be driven into the upper sheet while heating is still insufficient, causing a risk that the load on the welding device will be increased. If the rotational speed is less than 3000 rpm, there is a risk that plastic deformation will be inhibited due to insufficient heating. If, on the other hand, the rotational speed is more than 7000 rpm, the element may be deformed by excessive heating.

Next, the subsequent oxide film removal step is performed.

[Oxide film removal step]

In the oxide film removal step, the tip of the rotating element (namely, the lower part of the element) is brought into contact with the top surface of the lower sheet to expel an oxide film present on the top surface of the lower sheet. The oxide film removal step on the top surface of the lower sheet is initiated by the element being rotated by the control unit of the welding device. This oxide film removal step ends when the control unit of the welding device detects that the drive-in position of the element has reached a predetermined depth (namely, a predetermined drive-in depth) and the removal of the oxide film is judged to have completed.

The "drive-in depth" indicates the depth (mm) in which the element penetrates into the lower sheet in the thickness direction (that is, the distance in the thickness direction) starting from the position taken as 0 mm where the tip of the element comes into contact with the top surface of the lower sheet.

The "predetermined drive-in depth" is the depth (the drive-in depth) in the thickness direction at a position where the area of contact between the element and the lower sheet is equal to or greater than the sectional area of the mandrel portion of the element, and is determined in consideration of the deformation of the element by the pressurizing force applied during the driving.

For example, the "predetermined drive-in depth" in Examples described later is set to 0.8 mm based on the results of preliminary tests. This value is put beforehand as the "preset drive-in depth" to a memory unit of the welding device. The control unit compares the drive-in depth actually obtained by the measurement to the preset drive-in depth stored in the memory unit, and detects whether the predetermined drive-in depth is reached. When the control unit detects that the predetermined drive-in depth has been reached, it is determined that the removal of the oxide film has been completed. The "drive-in depth" may be actually measured by, for example, detecting the position of a pressurizing cylinder with an optical sensor.

As mentioned earlier, an oxide remaining on the top surface of the lower sheet that will form a joint with the element will be mixed into the joint. In the present invention, it is important to appropriately specify welding conditions during the oxide film removal step on the top surface of the lower sheet, and the element shape (specifically, the element diameter and the radius of curvature of the element tip). The welding conditions include at least pressurizing force, rotational speed, and the tensile strength of the metal sheet. In this manner, the reduction in time of the oxide film removal step can be realized. Details are omitted here and will be described later.

Next, the subsequent plastic deformation step is performed.

[Plastic deformation step]

In the plastic deformation step, the element is driven into the lower sheet while being rotated at high speed under the application of a pressurizing force controlled by the control unit of the welding device. In this manner, the friction welding process is initiated. In the friction welding process, the tip of the element that has penetrated in the lower sheet generates frictional heat, which plastically deforms the lower sheet and the element. The tip of the mandrel portion of the element is connected to the lower sheet by friction element welding, and the material of the upper sheet that has been pushed out by plastic deformation comes into contact with the upper part of the element and is held down by the collar portion.

To apply the welding method of the present invention to joining of metal sheets including ultrahigh-tensile steel, which will be described later, it is preferable that the pressurizing force in this step be 3 to 6 kN and the rotational speed be 3000 to 7000 rpm. If the pressurizing force is less than 3 kN, there is a risk that the pressurizing force will not promote the penetration into the upper sheet. If, on the other hand, the pressurizing force is more than 6 kN, the element will be driven into the upper sheet while heating is still insufficient, causing a risk that the load on the welding device will be increased. If the rotational speed is less than 3000 rpm, there is a risk that plastic deformation will be inhibited due to insufficient heating. If, on the other hand, the rotational speed is more than 7000 rpm, the element may be deformed by excessive heating.

Next, the subsequent compression step is performed.

[Compression step]

In the compression step, a mechanical joint is established between the element and the two or more metal sheets constituting the sheet assembly. In the final stage, the control unit of the welding device stops the rotation of the element and applies a pressurizing force to the element, and the material of the metal sheets that is pushed out by plastic deformation is pressure bonded to the element. The friction welding process is thus completed.

To apply the welding method of the present invention to joining of metal sheets including ultrahigh-tensile steel, which will be described later, it is preferable that the pressurizing force in this step be 8 to 9 kN. If the pressurizing force is less than 8 kN, there is a risk that the compression will be insufficient. If, on the other hand, the pressurizing force is more than 9 kN, the element may be deformed.

The process described above gives a sound connection between the element and the metal sheets constituting the sheet assembly, as illustrated in Fig. 1.

The upper sheet used in the welding method described above may be a metal sheet having a pilot hole (for example, a through hole). For example, such a pilot hole may be formed by a pre-holing process. In this case, the above-described step of penetrating the element into the upper sheet is omitted. That is, the stacked metal sheets (namely, the sheet assembly) are placed onto the support table of the welding device in such a way that the sheet assembly faces the element attached to the welding device, and the sheet assembly is subjected to the step of removing an oxide film on the top surface of the lower sheet, and the subsequent steps.

Next, the relationship in the present invention between the welding conditions in the oxide film removal step and the element shape will be described in detail.

As already mentioned, smooth discharge of an oxide film is effective for shortening the time required for the oxide film removal step on the top surface of the lower sheet. As a result of extensive studies, the present inventors have found that an appropriate area of contact between the lower part of the element and the top surface of the lower sheet can be ensured by (a) controlling the radius of curvature of an element tip to an appropriate range in accordance with the element diameter, the pressurizing force and the rotational speed during the oxide film removal step, and the tensile strength of the metal sheet (here, the lower sheet), and (b) performing the oxide film removal step using an element having a radius of curvature of the element tip in the appropriate range.

Specifically, the element used in the oxide film removal step is such that the radius of curvature r of the tip of the element satisfies:

expression (1) and $r \geq D/2$ when $5.0 > D \geq 3.0$,
expression (2) and $r \geq D/2$ when $7.0 > D \geq 5.0$, and
expression (3) and $r \geq D/2$ when $D \geq 7.0$,

$$(-0.017 \times D + 0.13) \times (P \times R/TS) \leq r \leq 400 - D \quad \cdots (1)$$

$$(-0.0042 \times D + 0.071) \times (P \times R/TS) \leq r \leq 400 - D \quad \cdots (2)$$

$$(-0.00042 \times D + 0.045) \times (P \times R/TS) \leq r \leq 400 - D \quad \cdots (3)$$

wherein D is the element diameter (mm), r is the radius of curvature (mm), P is the pressurizing force (kN) in the oxide removal step, R is the rotational speed (rpm) in the oxide film removal step, and TS is the tensile strength (MPa) of the lowermost metal sheet (the lower sheet).

An important feature of the present invention is that the element that has a shape satisfying the conditional expressions (1) to (3) is used in the oxide film removal step. The reasons for this will be described below.

The oxide film can be expeled more effectively and the welded joint that is obtained has higher joint strength with increasing area of contact between the lower part of the element and the top surface of the lower sheet. Thus, it will be effective to ensure an area of contact between the lower part of the element and the top surface of the lower sheet by increasing the element diameter (D) and approximating the element tip to flat. When, on the other hand, the element has a small element diameter (D), increasing the area of contact between the lower part of the element and the top surface of the lower sheet increases the thermal effect by heat input on the element. As a result, the welded joint that is obtained has a low joint strength. For this reason, the present invention adopts a gradual change in the radius of curvature (r) of the element tip depending on the element diameter (D), and specifies the above conditional expressions so that the area of contact between the lower part of the element and the top surface of the lower sheet will be optimized.

Specifically, when the element diameter (D) is $5.0 > D \geq 3.0$, conditional expression (1) is thus specified so that the tip curvature (r) of the element will be larger with decreasing element diameter (D) and, at the same time, $r \geq D/2$ is to be satisfied. If the tip curvature (r) of the element fails to satisfy conditional expression (1) and $r \geq D/2$, the lower part of the element has a narrow area of contact with the surface of the lower sheet and cannot remove the oxide film effectively.

If $r < D/2$, the cross-sectional diameter of the tip portion is smaller than the element diameter and an elevation change is created between the tip portion having such a curvature and the element. Thus, the radius of curvature is limited to $r \geq D/2$. As mentioned above, an element having a small element diameter (D) is significantly thermally affected by heat input when a contact area is ensured. Furthermore, a small element diameter means a small joint diameter and thus leads to a risk that sufficient joint strength cannot be obtained. For these reasons, the element diameter (D) of interest in the present invention is 3.0 mm or more.

When the element diameter (D) is $7.0 > D \geq 5.0$, the thermal influence is less because the element diameter (D) in conditional expression (2) is larger than the element diameter (D) in conditional expression (1). In view of this, conditional expression (2) is thus specified so that the change in the tip curvature (r) of the element relative to the element diameter (D) will be more gradual than in conditional expression (1) and, at the same time, $r \geq D/2$ is to be satisfied. If the tip curvature (r) of the element fails to satisfy conditional expression (2) and $r \geq D/2$, the lower part of the element has a narrow area of contact with the surface of the lower sheet and cannot remove the oxide film on the joining surface effectively. The reason why the radius of curvature is limited to $r \geq D/2$ is the same as described above.

Furthermore, when the element diameter (D) is $D \geq 7.0$, the largeness of the element diameter D in conditional expression (3) compared to those in conditional expressions (1) and (2) reduces the thermal influence even when the tip curvature (r) of the element is small, and allows a contact area to be ensured. For this reason, conditional expression (3) is thus specified so that the tip curvature (r) of the element will be smaller with increasing element diameter (D) and, at the same time, $r \geq D/2$ is to be satisfied.

The upper limit of the element diameter (D) applied to conditional expression (3) is not particularly specified. It is, however, preferable that the element diameter (D) be 9.0 mm or less. The reason for this is as follows. An element having an element diameter (D) of more than 9.0 mm requires a large torque for the rotation and penetration of the element, and the size of the device configuration that is required will be also large. That is, practicality is impaired from the point of view of the automobile assembling process. The reason why the radius of curvature is limited to $r \geq D/2$ is the same as described above.

In addition to the conditional expressions described above, the oxide film removal step in the present invention may further involve welding conditions specified below for the purpose of further promoting the discharge of the oxide film.

[Rotational speed: R] (preferred condition)

The rotational speed (R) during the oxide film removal step is preferably 500 rpm or more. The reason for this is because rotations at a rotational speed (R) of 500 rpm or more promote plastic deformation by frictional heat and also accelerate the removal of the oxide film. The rotational speed (R) is more preferably 5000 rpm or more. The upper limit of the rotational speed (R) is not particularly specified. To prevent a decrease in element strength due to excessive heating, the rotational speed (R) is preferably 9000 rpm or less, and more preferably 8000 rpm or less.

[Pressurizing force: P] (preferred condition)

The pressurizing force (P) during the oxide film removal step is preferably 1 kN or more. The reason for this is because a pressurizing force (P) of 1 kN or more promotes plastic deformation of the lower sheet and also accelerates the removal of the oxide film. The pressurizing force (P) is more preferably 3 kN or more, and still more preferably 7 kN or more. The upper limit of the pressurizing force (P) is not particularly specified. From the point of view of element strength, the pressurizing force (P) is preferably 10 kN or less, and more preferably 9 kN or less.

Next, the shape of the element used in the welding method of the present invention will be described with reference to Fig. 2.

Fig. 2 is a longitudinal sectional view through the center of an element 1. As illustrated in Fig. 2, the element 1 used in the present invention has a mandrel portion 2 and a collar portion 3.

As illustrated in Fig. 1, the element 1 is a tool that is rotated and pressed into a sheet assembly 6 including two or more stacked metal sheets to friction weld the sheet assembly with the element 1.

The mandrel portion 2 is provided along the axis of the element 1 and has a cylindrical shape except the tip. The diameter (mm) of the cylinder is the element diameter (D). The preferred lower limit of the element diameter (D) is preferably 3.0 mm or more. The element diameter is more preferably 3 to 9 mm. The tip portion of the mandrel portion is spherical. The side of this spherical surface is curved as illustrated in the sectional view of Fig. 2. In the present invention, as illustrated in Fig. 2, the radius of curvature of the tip of the mandrel portion is denoted by r (mm). The radius of curvature (r) is preferably 3 to 399 mm.

The total length L (mm) of the mandrel portion 2 is equal to or less than the sum of the thicknesses of all the metal sheets constituting the sheet assembly 6. The total length L of the mandrel portion 2 may be adjusted to a length that allows the tip of the mandrel portion 2 to be joined to the lower sheet 8. The total length L is preferably 3 to 6 mm.

The collar portion 3 is provided on the mandrel portion 2, that is, at the head of the element 1. As illustrated in Fig. 2, the shape of the collar portion 3 may be, for example, a wafer, a truss, or the like. The collar portion 3 may have any shape that can hold back the material of the upper sheet 7 that is pushed out by plastic flow.

The letter "H" in Fig. 2 indicates the distance from the tip top of the mandrel portion to the position leading from the cut in the direction perpendicular to the central axis of the mandrel. Preferably, H is 0.1 to 1 mm.

Specifically, the element 1 used in the present invention is formed into such a shape that the radius of curvature (r) of the element tip falls within a numerical range derived from the conditional expression consisting of the element diameter (D), the pressurizing force (P) and the rotational speed (R) during the oxide film removal step, and the TS of the metal sheet (the workpiece). This ensures that the oxide film on the top surface of the lower sheet can be easily expeled from the joint interface, and the oxide removal step can be shortened in time. Even when the step is shortened in time, the joining with the element 1 of the present invention can ensure a sound connection compared to joining with the conventional element, such as one disclosed in Patent Literature 1.

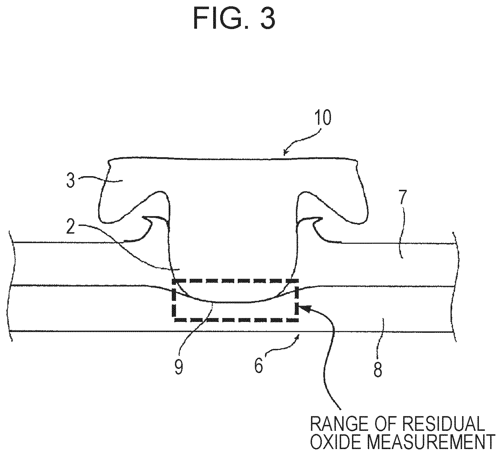

Next, the connection of a welded joint obtained by the welding method of the present invention will be described with reference to Figs. 1 and 3.

Fig. 1 illustrates an exemplary sheet assembly consisting of two metal sheets that is joined using an element 1 according to the present invention. Fig. 3 illustrates a conventional example of a sheet assembly consisting of two metal sheets that is joined using a conventional element 10. In both Figs. 1 and 3, the friction element welding method of the present invention described hereinabove is used as the welding method. Figs. 1 and 3 are through-thickness sectional views of the obtained welded joints cut through the center of the element.

When a sheet assembly 6 composed of two metal sheets (an upper sheet 7 and a lower sheet 8 in Fig. 3) is joined by the welding method of the present invention using a conventional element 10, the element 10 forms a joint between the upper sheet 7 and the lower sheet 8 as illustrated in the conventional example of Fig. 3. As illustrated in Fig. 3, the element 10 achieves joining of the upper sheet 7 and the lower sheet 8 but has a gap between the material of the upper sheet 7 that has been plastically deformed and pushed out during the welding process, and a collar portion 3 provided on a mandrel portion.

Here, the "conventional element" used above has a cone shape at the tip of the mandrel portion but, unlike the present invention, the radius of curvature is not specified in accordance with the element diameter and the welding conditions.

The present inventors believe that this gap stems from the step of removing an oxide film on the surface of the lower sheet in the friction element welding method. Observation was made on a cross section of a joint portion of a welded joint obtained with insufficient discharge of an oxide film on the top surface of a lower sheet in the oxide film removal step. The observation confirmed a residual oxide from the oxide film on the top surface of the lower sheet, at the joint interface between the element 10 and the lower sheet 8. As a result, the connection was unsound. This unsoundness was ascribed to the insufficient time of the oxide film removal step and the insufficient discharge of the oxide film. Another reason was probably because the inappropriate design of the element shape failed to ensure a sufficient area of contact between the element and the top surface of the lower sheet and did not promote the removal of the oxide film.

When, in contrast, a sheet assembly 6 composed of two metal sheets (an upper sheet 7 and a lower sheet 8 in Fig. 1) is joined by the welding method of the present invention using the element 1 of the present invention (see Fig. 2), the element 1 forms a joint illustrated in Fig. 1. Specifically, the sheet assembly 6 consisting of two sheet-shaped members (here, the upper sheet 7 and the lower sheet 8) is joined in such a manner that the tip of the mandrel 2 is connected to the lower sheet 8 by friction element welding, and the material of the upper sheet 7 that has been plastically deformed and pushed out by the welding process is held down by the collar portion 3 provided on the top of the mandrel. The metal sheets 7, 8 and the element 1 are thus joined together.

As illustrated in Fig. 1, an observation of a cross section of the joint portion around the element 1 of the present invention confirmed that the connection was sound. As will be demonstrated in Examples later, it has been shown that the welding method using the appropriately specified element shape according to the present invention can significantly reduce the proportion of residual oxide after the oxide film removal step, unlike the case where the conventional element 10 illustrated in Fig. 3 is used in the welding method.

In the present invention, steel sheets may be used as the metal sheets (the workpieces) that constitute a sheet assembly. In this case, two or more metal sheets including at least one steel sheet may be stacked together to form a sheet assembly. For example, an aluminum alloy sheet and a steel sheet may be stacked to form a sheet assembly, or, for example, steel sheets may be stacked to form a sheet assembly. When an aluminum alloy sheet and a steel sheet are combined as a sheet assembly, the aluminum alloy sheet may be used as the upper sheet or the lower sheet.

The tensile strength (TS) of the above "steel sheet" is preferably 590 MPa or more. In the example illustrated in Fig. 1, an ultrahigh-tensile steel sheet or a high-tensile steel sheet may be used as the upper sheet 7 and/or the lower sheet 8. In the present invention, the term "ultrahigh-tensile" means that the steel sheets have a tensile strength (TS) of 980 MPa or more, and the term "high-tensile" indicates that the steel sheets have a tensile strength (TS) of 590 MPa or more and less than 980 MPa. It is preferable that the tensile strength of the lower sheet be 590 MPa or more.

EXAMPLES

Examples of the present invention are described below to further facilitate the understanding of the present invention. Examples below do not limit the scope of the present invention, and any modifications or the like that satisfy the gist of the present invention fall within the technical scope of the present invention.

Metal sheets described as upper sheets and lower sheets in Table 1 were used as test materials and were stacked to form sheet assemblies. The upper sheet in the sheet assembly A had a pre-hole 7 mm in diameter Φ.

In this Example, the oxide film removal step alone was performed using the above sheet assemblies and evaluations were made as described below. In the oxide film removal step, the pressurizing force (P) and the rotational speed (R) were controlled as described in Table 2. In this process, the drive-in depth was set to 0.8 mm. The elements used for welding had a shape defined by an element diameter (D) and an element tip curvature (r) described in Table 2 (see Fig. 2).

The following evaluations were made after the oxide film removal step.

[Evaluation of reduction in time]

The reduction in time of the oxide film removal step of the present invention was evaluated as follows.

In this Example, the time required for the oxide film removal step of the present invention is shown in "Time t (seconds) required to complete the oxide film removal step" in Table 2. Specifically, the "required time (t)" is the amount of time required from the start to the completion of the removal of an oxide film in the oxide film removal step. The removal in the oxide film removal step was judged to "start" when the tip of the element came into contact with the top surface of the lower sheet. The removal in the oxide film removal step was judged to be "complete" when the tip of the element reached the drive-in depth described above. In this Example, the upper limit of the time required for the oxide film removal step was set to 10 seconds.

Here, the rating was "A" when the required time (t) was 0 seconds or more and less than 2 seconds, "B" when the required time (t) was 2 seconds or more and less than 3 seconds, and "C" when the required time (t) was 3 seconds or more. The rating was "F" when the oxide film removal step was not completed within the upper limit time (within 10 seconds). The ratings "A" and "B" were acceptable, with "A" being best. The ratings "C" and "F" were rejected, with "F" being worst. The evaluation results obtained are described in Table 2.

[Evaluation of oxide film survival ratio]

The lower sheets after the oxide film removal step were analyzed as described below to observe the distribution of the oxide film remaining on the top surface of the lower sheet, and were subsequently evaluated according to the criteria described later.

The distribution of the oxide film was observed immediately after the oxide film removal step of the present invention. The distribution of the oxide remaining on the surface of the steel sheet (the top surface of the lower sheet) at the interface between the element and the steel sheet was observed using EPMA (Electron Probe Micro Analyzer). The region that was observed was the range of residual oxide measurement shown in a rectangular frame in Fig. 1. Specifically, the range of measurement was a region that included the interface between the lower part of the element and the lower sheet and corresponded to the element diameter (D) in the width direction.

Five fields of view were appropriately selected at equal distances on each of the left and the right of the element axis, and the amounts of the oxide measured in these ten fields of view were averaged. The average was taken as the amount of the oxide after the oxide film removal step. Separately, the amount of the oxide on the surface of the lower sheet before the oxide film removal step was determined by observing the cross section of the lower sheet with EPMA. The distribution ratio x (the oxide film survival ratio) (%) of the amount of the oxide after the oxide film removal step relative to the amount of the oxide on the surface of the lower sheet before the oxide film removal step was calculated.

Here, the rating was "A" when the distribution ratio x of the residual oxide was less than 10%, "B" when the distribution ratio x was 10% or more and less than 20%, "C" when the distribution ratio x was 20% or more and less than 30%, and "F" when the distribution ratio x was 30% or more. The ratings "A" and "B" were acceptable (namely, sound connection), with "A" being best. The ratings "C" and "F" were rejected, with "F" being worst. The "sound connection" means that the distribution of the residual oxide was significantly reduced as described above. The evaluation results obtained are described in Table 2. Inventive Examples that satisfied $r \geq D/2$ and any one of expressions (1) to (3) achieved sufficient oxide removal in a short time. In contrast, Comparative Examples that did not satisfy any one or more of $r \geq D/2$ and expressions (1) to (3) failed to remove the oxide sufficiently in a short time. It is therefore difficult to expect that sound connection would be obtained.

[Table 1]

| Sheet assemblies | Upper sheet | | | Lower sheet | | |
|---|---|---|---|---|---|---|
| | Tensile strength (MPa) | Metal sheet | Thickness (mm) | Tensile strength (MPa) | Metal sheet | Thickness (mm) |
| A | 1470 | Ultrahigh-tensile steel | 1.6 | 1470 | Ultrahigh-tensile steel | 1.6 |
| B | 1470 | Ultrahigh-tensile steel | 1.0 | 1470 | Ultrahigh-tensile steel | 1.6 |
| C | 270 | Aluminum alloy | 1.6 | 1470 | Ultrahigh-tensile steel | 1.6 |
| D | 590 | High-tensile steel | 1.6 | 980 | Ultrahigh-tensile steel | 1.6 |

[Table 2]

| No. | Sheet assemblies | Element diameter D (mm) | Radius of curvature r of element tip (mm) | Pressurized force P in oxide removal step (kN) | Rotational speed R in oxide removal step (rpm) | Tensile strength TS of lower sheet (MPa) | Conditional expression *1 | | Time t (seconds) required to complete oxide film removal step | Proportion x (%) of residual oxide distributed at tool-steel sheet interface after welding | Remarks |
|---|---|---|---|---|---|---|---|---|---|---|---|
| | | | | | | | Exp. | Result | | | |
| 1 | A | 2.90 | 396 | 7 | 6500 | 1470 | - | - | B | F | Comp. Ex. |
| 2 | A | 3.00 | 400 | 7 | 6500 | 1470 | Exp. (1) | × | B | C | Comp. Ex. |
| 3 | A | 3.20 | 390 | 7 | 6500 | 1470 | Exp. (1) | ○ | B | B | Inv. Ex. |
| 4 | A | 9.00 | 340 | 7 | 6500 | 1470 | Exp. (3) | ○ | B | B | Inv. Ex. |
| 5 | A | 9.20 | 392 | 7 | 6500 | 1470 | Exp. (3) | × | F | B | Comp. Ex. |
| 6 | A | 8.90 | 389 | 7 | 6500 | 1470 | Exp. (3) | ○ | B | B | Inv. Ex. |
| 7 | A | 2.80 | 5 | 7 | 6500 | 1470 | - | - | B | C | Comp. Ex. |
| 8 | A | 3.20 | 3 | 7 | 6500 | 1470 | Exp. (1) | ○ | B | B | Inv. Ex. |
| 9 | A | 3.10 | 5 | 7 | 6500 | 1470 | Exp. (1) | ○ | B | B | Inv. Ex. |
| 10 | A | 9.00 | 1 | 7 | 6500 | 1470 | Exp. (3) | × | F | B | Comp. Ex. |
| 11 | A | 9.30 | 2 | 7 | 6500 | 1470 | Exp. (3) | ○ | C | B | Comp. Ex. |
| 12 | A | 9.00 | 45 | 7 | 6500 | 1470 | Exp. (3) | ○ | B | B | Inv. Ex. |
| 13 | A | 4.55 | 60 | 7 | 6500 | 1470 | Exp. (1) | ○ | A | A | Inv. Ex. |
| 14 | A | 5.50 | 60 | 7 | 6500 | 1470 | Exp. (2) | ○ | A | A | Inv. Ex. |
| 15 | A | 6.00 | 45 | 7 | 6500 | 1470 | Exp. (2) | ○ | B | A | Inv. Ex. |
| 16 | A | 5.00 | 54 | 10 | 9000 | 1470 | Exp. (2) | ○ | A | A | Inv. Ex. |
| 17 | A | 4.90 | 72 | 10 | 9000 | 1470 | Exp. (1) | ○ | B | A | Inv. Ex. |
| 18 | B | 4.50 | 69 | 3 | 5000 | 1470 | Exp. (1) | ○ | A | B | Inv. Ex. |
| 19 | B | 6.00 | 63 | 3 | 5000 | 1470 | Exp. (2) | ○ | B | B | Inv. Ex. |
| 20 | D | 4.55 | 60 | 7 | 6500 | 980 | Exp. (1) | ○ | A | A | Inv. Ex. |
| 21 | D | 5.00 | 66 | 10 | 9000 | 980 | Exp. (2) | ○ | A | B | Inv. Ex. |
| 22 | C | 4.55 | 60 | 8.5 | 5000 | 1470 | Exp. (1) | ○ | B | A | Inv. Ex. |

| No. | Sheet assemblies | Element diameter D (mm) | Radius of curvature r of element tip (mm) | Pressurized force P in oxide removal step (kN) | Rotational speed R in oxide removal step (rpm) | Tensile strength TS of lower sheet (MPa) | Conditional expression *1 | | Time t (seconds) required to complete oxide film removal step | Proportion x (%) of residual oxide distributed at tool-steel sheet interface after welding | Remarks |
|---|---|---|---|---|---|---|---|---|---|---|---|
| | | | | | | | Exp. | Result | | | |
| 23 | C | 4.55 | 60 | 8.5 | 9000 | 1470 | Exp. (1) | ○ | A | B | Inv. Ex. |
| 24 | D | 4.55 | 40 | 7 | 500 | 590 | Exp. (1) | ○ | A | A | Inv. Ex. |
| 25 | A | 4.55 | 40 | 7 | 8000 | 1470 | Exp. (1) | ○ | A | A | Inv. Ex. |

*1. Exp. (1):$(-0.017 \times D + 0.13) \times (P \times R/TS) \leq r \leq 400-D$
Exp. (2):$(-0.0042 \times D + 0.071) \times (P \times R/TS) \leq r \leq 400-D$
Exp. (3):$(-0.00042 \times D + 0.045) \times (P \times R/TS) \leq r \leq 400-D$

Reference Signs List

| | |
|---|---|
| 1, 10 | ELEMENT |
| 2 | MANDREL PORTION |
| 3 | COLLAR PORTION |
| 6 | SHEET ASSEMBLY |
| 7 | UPPER SHEET |
| 8 | LOWER SHEET |
| 9 | ELEMENT-LOWER SHEET JOINT INTERFACE |

**Claims**

1. A friction element welding method of joining a sheet assembly including two or more stacked metal sheets by pressing an element into the sheet assembly while rotating the element, the method comprising, before a step of starting frictional heat welding:

   an oxide film removal step of bringing a lower part of the element into contact with a top surface of a lowermost metal sheet arranged at the bottom of the sheet assembly, and removing an oxide film,
   the element used in the oxide film removal step being such that a radius of curvature r of a tip of the element satisfies:

   expression (1) and $r \geq D/2$ when $5.0 > D \geq 3.0$,
   expression (2) and $r \geq D/2$ when $7.0 > D \geq 5.0$, and
   expression (3) and $r \geq D/2$ when $D \geq 7.0$,

$$(-0.017 \times D + 0.13) \times (P \times R/TS) \leq r \leq 400 - D \quad \cdots(1)$$

$$(-0.0042 \times D + 0.071) \times (P \times R/TS) \leq r \leq 400 - D \quad \cdots(2)$$

$$(-0.00042 \times D + 0.045) \times (P \times R/TS) \leq r \leq 400 - D \quad \cdots(3)$$

   wherein D is an element diameter (mm), r is the radius of curvature (mm), P is a pressurizing force (kN), R is a rotational speed (rpm), and TS is a tensile strength (MPa) of the lowermost metal sheet.

2. The friction element welding method according to claim 1, wherein the rotational speed in the oxide film removal step is 500 rpm or more.

3. The friction element welding method according to claim 1 or 2, wherein the pressurizing force in the oxide film removal step is 1 kN or more.

4. The friction element welding method according to claim 1 or 2, wherein at least one of the two or more metal sheets is a steel sheet, and the tensile strength of the steel sheet is 590 MPa or more.

5. The friction element welding method according to claim 3, wherein at least one of the two or more metal sheets is a steel sheet, and the tensile strength of the steel sheet is 590 MPa or more.

# FIG. 1

RANGE OF RESIDUAL
OXIDE MEASUREMENT

# FIG. 2

# FIG. 3

RANGE OF RESIDUAL
OXIDE MEASUREMENT

**EP 4 574 325 A1**

# INTERNATIONAL SEARCH REPORT

| | International application No. |
|---|---|
| | **PCT/JP2023/039735** |

**A.   CLASSIFICATION OF SUBJECT MATTER**

**B23K 20/12**(2006.01)i
FI:   B23K20/12 A

According to International Patent Classification (IPC) or to both national classification and IPC

**B.   FIELDS SEARCHED**

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2009-154209 A (HITACHI, LTD.) 16 July 2009 (2009-07-16)<br>entire text, all drawings | 1-5 |
| A | JP 2005-034879 A (MAZDA MOTOR CORP.) 10 February 2005 (2005-02-10)<br>entire text, all drawings | 1-5 |
| A | WO 2020/256030 A1 (NIPPON STEEL CORP.) 24 December 2020 (2020-12-24)<br>entire text, all drawings | 1-5 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 574 325 A1

## INTERNATIONAL SEARCH REPORT
### Information on patent family members

International application No.

**PCT/JP2023/039735**

| Patent document cited in search report | | | Publication date (day/month/year) | Patent family member(s) | | | Publication date (day/month/year) |
|---|---|---|---|---|---|---|---|
| JP | 2009-154209 | A | 16 July 2009 | US 2009/0218033 A1 entire text, all drawings | | | |
| JP | 2005-034879 | A | 10 February 2005 | US 2005/0035180 A1 entire text, all drawings EP 1498210 A1 | | | |
| WO | 2020/256030 | A1 | 24 December 2020 | EP 3984683 A1 entire text, all drawings CN 113993652 A | | | |

Form PCT/ISA/210 (patent family annex) (January 2015)

## REFERENCES CITED IN THE DESCRIPTION

**Patent documents cited in the description**

- JP 2013527804 A

**Non-patent literature cited in the description**

- **JAMIE D. SKOVRON** ; **BRANDT J. RUSZKIEWICZ** ; **LAINE MEARS**. INVESTIGATION OF THE CLEANING AND WELDING STEPS FROM THE FRICTION ELEMENT WELDING PROCESS. *ASME 2017 12th International Manufacturing Science and Engineering Conference collocated with the JSME/ASME 2017 6th International Conference on Materials and Processing*, 04 June 2017